# EUROPEAN PATENT APPLICATION

(11) **EP 4 338 824 A1**
(43) Date of publication of application: **20.03.2024**
(21) Application number: 21942054.4
(22) Date of filing: 26.07.2021
(51) Int. Cl.: B01F 23/20, F16L 55/00, B01F 25/30, B01F 25/40, B01F 35/00, B01F 25/00

(54) **PIPE INSERT FOR GENERATING NANOBUBBLES AND NANOBUBBLE GENERATOR COMPRISING SAME**

(30) Priority: 13.05.2021 KR 20210061766
(71) Applicant: Fawoo Nanotech Co., Ltd, Gyeonggi-do 14522 (KR)
(72) Inventor: YOO, Tae Geun, Seoul 07214 (KR); YOO, A Ram, Gumi-si, Gyeongsangbuk-do (KR); YOO, Young Ho, Seoul 07214 (KR)
(74) Representative: Zacco Sweden AB
(86) International application number: PCT/KR2021/009628
(87) International publication number: WO 2022/239906

(57) **Abstract**

The present invention relates to a pipe insert for generating nano-bubbles and a nano-bubble generator comprising such a pipe insert, which enable the generation of nano-bubble water of good quality in terms of concentration and micronization size to be obtained directly out of faucets, shower heads, etc. just by being inserted into a general water supply pipe, such that nano-bubble water with various advantages can be obtained and used conveniently and widely in any environment including ordinary homes without high cost and installation space.

To this end, the pipe insert for generating nano-bubbles of the present invention is an insert inserted into a plumbing pipe in the longitudinal direction, wherein, in order to increase the friction surface of a gas-liquid mixed fluid for generating nano-bubbles in the pipe, the body of the insert is configured such that either or both of dividing walls dividing the fluid path space of the pipe and space dividers protruding into the fluid path space of the pipe are formed continuously in the longitudinal direction of the pipe.

## Description

### [Technical Field]

The present disclosure relates to a pipe insert for generating nano-bubbles and a nano-bubble generator comprising the same, which enable the generation of nano-bubble water of good quality in terms of concentration and micronization size to be obtained directly through faucets, shower heads, and the like, as long as the pipe insert is inserted into an ordinary water supply and plumbing pipe, such that nano-bubble water having a variety of properties and benefits can be obtained conveniently and used widely in any environment including ordinary homes-without additional costs and installation space.

### [Background Art]

Nano-bubbles as ultra-fine bubbles of hundreds of nm or less exhibit physical and chemical properties such as gas solubility, self-pressurization, electrical charging and the like, enabling a variety of applications, and are used in fields including purification of contaminated water and wastewater. In particular, the operation effect of nano-bubbles is much greater than that of micro bubbles having a size of µm, used in the fields such as medicine, sterilization, disinfection, deodorization, cleaning and the like.

In terms of micronization of bubbles, in the case where friction pressure is applied to a gas-liquid mixed fluid in which oxygen is mixed in the water, the fluid generates heat, and its bubbles become tiny and smooth as a result of reaction against the friction, leading to a reduction in frictional resistance.

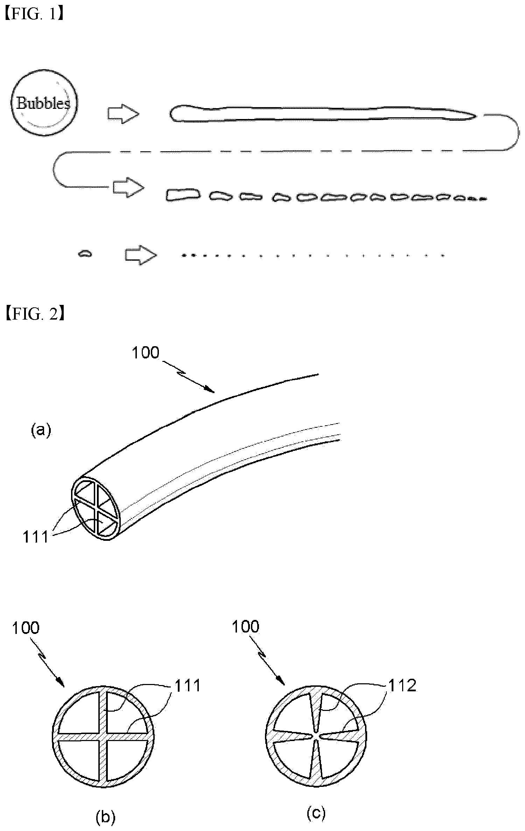

When a gas-liquid mixed fluid rubs against the inner surface of a fluid path flows, while being pressured and flowing, the bubbles included in the gas-liquid mixed fluid, in order to reduce frictional resistance as illustrated in FIG. 1, are tensile-strained along the friction surface, and then split into smaller ones and become tiny until nano-bubbles are generated. This is defined as "theories of bubble micronization and nano-bubble generation caused by friction" by the applicant.

In the theory of nano-bubble generation, in the case where the friction surface in contact with the inner surface of a fluid path per unit volume of gas-liquid mixed fluid increases, where the friction speed increases, where the friction lasting time increases, and where the amount of oxygen included in the fluid increases, nano-bubbles of good quality and quantity can be generated. In the case where the friction surface with fluid per unit area of the fluid path increases, the flow length required to generate nano-bubbles can decrease.

The applicant devised KR Patent No. 10-2100074 (published on May 15, 2020, hereinafter, "related art 1"), based on the theory of nano-bubble generation caused by friction.

Related art 1, as illustrated in FIG. 2, relates to a fluid path member 100 having a body that has ductile properties and is shaped into a tube, and having one or more dividing walls 111 (see FIG. 2(a)) or one or more space dividers 112 (see FIG. 2(b)) that divide the fluid path space in the fluid path to expand the friction surface of the gas-liquid mixed fluid.

In the fluid path member 100 of related art 1, the dividing walls 111 and the space dividers 112 are formed densely in the fluid path space, and they increase the length of the circumference of the cross-section of the fluid path space, expanding the friction surface per unit area of the fluid path. Thus, just the passing of a gas-liquid mixed fluid including bubbles through a fluid path of a predetermined length can generate a meaningful concentration of nano-bubbles.

As the thickness of the dividing walls 111 or the space dividers 112 decreases, the dividing walls 111 or the space dividers 112 can be formed densely and this ensures easy expansion of the friction surface.

The fluid path member 100 of related art 1 is made of a ductile material such as silicone and the like, extrusion-molded, and bent freely, but is vulnerable to the inflow pressure of fluid and experiences expansion.

The expansion of the fluid member 100 has to be prevented by thickening the main wall enough to tolerate the inflow pressure of the fluid, or by fitting an expansion prevention member such as a net-tissue tube referred to as "an expander-tube" outside the body of the insert.

In the case where the main wall is thick, it causes a difficulty in extrusion because of the large difference in thickness between the main wall and the dividing walls or the space dividers, which are preferably formed thin, and also increases the cost of the raw materials.

In the case where a net-tissue tube is used, the net-tissue tube needs to be fitted across the entire length of the fluid path member, causing a cumbersome procedure and excessive labor hours.

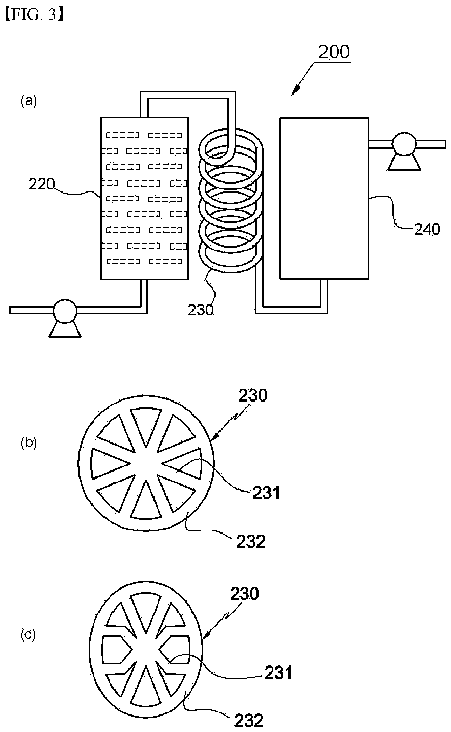

Additionally, "a circulatory nano-bubble generator 200" provided with a mixing chamber 220, a spiral splitter 230 and a saturation tank 240 and configured to circulate a gas-air mixture and generate nano-bubbles is disclosed in KR Patent Publication No. 10-2018-0131664 (published on December 11, 2018, hereinafter, "related art 2") (see FIG. 3(a)).

The spiral splitter 230 of related art 2 is shaped into a spiral to be elongated, and has the second, third and fourth dividing plates 231 in stages in addition to the first dividing plate in order to enhance the efficiency of bubble generation (see FIG. 3(b)).

The spiral splitter 230 configured as described above cannot generate nano-bubbles by itself. In order for the spiral splitter 230 to generate a meaningful concentration of nano-bubbles, the dividing plates 231 need to be formed densely, and the splitter should be sufficiently long, at least hundreds of meters.

If the spiral splitter 230 configured as described above is formed linearly, the splitter can be extrusion-molded to have a length required for the generation of nano-bubbles.

However, in order to form the dividing plates 231 densely, the thickness of the dividing walls 231 needs to be much less than the thickness of the main wall 232 that has the bearing force.

A big difference in thickness between the dividing plates 231 and the main wall 232 causes a difficulty in extrusion-molding, and being little different in thicknesses between them lowers the efficiency of nano-bubble generation since the size of the flow passage is small compared to the diameter of the pipe, and increases the cost of the raw materials.

Furthermore, the spiral splitter 230 of related art 2 is formed in a spiral shape rather than in a linear shape, causing difficulty in extrusion-molding, and it is difficult to make the flow length continue several meters or longer.

It is because, while a linear shape is forcibly twisted into a spiral shape, the dividing plates 231 are distorted (see FIG. 3(c)), and in the case where the twist of the spiral shape is repeated continuously, the distortion of the dividing plates occurs alternately at each twist variation, and the flow passage is blocked, making it difficult for water to flow.

On the other hand, the fluid path member 100 of related art 1 can be used to generate nano-bubbles in water for a sink or for a shower at ordinary homes.

For the fluid path member to be connected to the water tap of a sink, and the like, the fluid path member is provided as a kit for generating nano-bubbles, having a pipe connector at both ends of the member, one end connected to the water supply pipe, and the other to a water tap such as a faucet and the like.

However, in the case where the fluid path member kit for generating nano-bubbles is installed at ordinary homes, and the like where a water tap is installed, there is not enough space, and the fluid path member kit needs to be installed outside, and this requires a cumbersome connection procedure.

In the case where the fluid path member is replaceable with a water supply pipe, the above problems can be solved without difficulty, and nano-bubble water having excellent properties and benefits can be used conveniently in anywhere.

The fluid path member 100, which is made of a ductile material, can bend freely but lacks a bearing force that is a common property of ordinary plumbing pipes made of a hard material, making it hard to be buried into a wall with a connection member such as elbow, T, and the like.

### [Description of the Invention]

### [Technical Problems]

The present invention is devised to solve the above problems.

The objective of the present disclosure is to provide a pipe insert for generating nano-bubbles and a nano-bubble generator comprising the same that enables the generation of nano-bubble water of good quality in terms of concentration and micronization size to be discharged directly through faucets, shower heads, and the like, as long as the present invention is inserted into an ordinary water supply and plumbing pipe without an additional device, such that nano-bubble water having a variety of properties and benefits can be obtained conveniently and used widely in any environment including ordinary homes without additional costs and installation space.

The objective of the present disclosure is to provide a pipe insert for generating nano-bubbles that ensures improvement in productivity and a reduction in costs, since no action is required to prevent expansion while friction surfaces are formed densely in the fluid path.

The objective of the present disclosure is to provide a pipe insert for generating nano-bubbles, in which, while the friction surface is densely formed, there is no big difference in thickness among the inner configuration members such as the main wall, dividing walls, space dividers, and the like, ensuring easy extrusion-molding.

### [Technical Solutions]

A pipe insert for generating nano-bubbles according to the present disclosure,
as an insert inserted and installed into a plumbing pipe in the longitudinal direction,
to increase the friction surface of a gas-liquid mixed fluid for generating nano-bubbles in the pipe,
the body of the insert is formed in a way that either or both of dividing walls configured to divide a fluid path space of the pipe, and space dividers configured to protrude into the fluid path space are formed continuously in the longitudinal direction of the pipe.

The body of the insert may be surrounded by a main wall, and one or more spacer protrusions for maintaining the gap between the main wall and the inner wall of the pipe may be formed continuously around the main wall in the longitudinal direction of the pipe.

A pipe insert for generating nano-bubbles in an embodiment,
as an insert inserted and installed into a plumbing pipe in the longitudinal direction,
to increase the friction surface of a gas-liquid mixed fluid for generating nano-bubbles in the pipe,
the pipe insert comprises the main body configured to form one or more sectional spaces, and one or more sub bodies inserted into the sectional spaces of the main body longitudinally,
the main body and the sub body respectively comprise either or both of dividing walls configured to divide the fluid path space of the pipe and space dividers configured to protrude into the fluid path space.

A pipe insert for generating nano-bubbles in an embodiment,
as an insert inserted and installed into a plumbing pipe in the longitudinal direction,
to increase the friction surface of a gas-liquid mixed fluid for generating nano-bubbles in the pipe,
the body of the insert has a spiral-shaped cross-section, and is formed continuously in the longitudinal direction of the pipe.

While multiple protrusions are formed on the body of the insert,
the protrusions may be shaped into a strap-type or a dot-type, and they are formed continuously in the longitudinal direction of the pipe.

A nano-bubble generator according to the present disclosure attaining the above objectives comprises the forementioned pipe insert for generating nano-bubbles.

### [Advantageous Effects]

A pipe insert for generating nano-bubbles according to the present disclosure, configured as described above,
enables the generation of nano-bubble water of good quality in terms of concentration and micronization size to be discharged directly through faucets, shower heads, and the like, as long as the present invention is inserted into an ordinary water supply pipe without an additional device, such that nano-bubble water having a variety of properties and benefits can be obtained conveniently and used widely in any environment including ordinary homes without additional costs and installation space.

Furthermore, any ordinary pipe can be selected and used as a means of generating nano-bubbles, improving the ease of nano-bubble generation significantly.

Furthermore, the pipe insert is inserted into a pipe, with no need to prevent the expansion of the body of the insert, resulting in higher productivity and lower costs.

Furthermore, as the body of the insert is inserted into and protected by an additional pipe, the pipe insert does not have to have the main wall, and even in the case where the main wall is provided, the main wall does not have to be thicker than the dividing walls and the space dividers, ensuring the ease of extrusion-molding.

Furthermore, a nano-bubble generator comprising the pipe insert for generating nano-bubbles is used to obtain a small or large amount of highly micronized nano-bubble water conveniently.

### [Brief Description of the Drawings]

FIG. 1 is a view showing the theory of nano-bubble generation caused by friction.
FIG. 2 is a view showing the configuration of related art 1.
FIG. 2(a) is a perspective view, FIG. 2(b) is a sectional view of FIG. 2(a), and FIG. 2(c) is a sectional view of another example corresponding to FIG. 2(b).
FIG. 3 is a view showing the configuration of related art 2.
FIG. 3(a) is the entire diagram, FIG. 3(b) is an enlarged sectional view showing the cross-section of the spiral splitter in FIG. 3(a), and FIG. 3(c) is a view showing a deformed state of FIG. 3(b).
FIG. 4(a) is a perspective view showing the configuration of an embodiment according to the present disclosure, and FIG. 4(b) is a perspective view showing that the present invention in FIG. 4(a) is inserted into a pipe.
FIG. 5(a) is an enlarged view showing the cross-section along line A-A in FIG. 4, and FIG. 5(b) is an enlarged view showing the cross-section along line B-B in FIG. 4.
FIGS. 6(a) and 6(b) are front views showing the configuration of an embodiment according to the present disclosure.
FIGS. 7(a) and 7(b) are front views showing the configuration of an embodiment according to the present disclosure.
FIG. 8 is a front view showing the configuration of an embodiment according to the present disclosure.
FIG. 9 is a front view showing the configuration of an embodiment according to the present disclosure.
FIG. 9(a) is a view showing the decoupled state, and FIG. 9(b) is a view showing the coupled state.
FIG. 10 is a front view showing the configuration of an embodiment according to the present disclosure.
FIG. 10(a) is a view showing the decoupled state, and FIG. 10(b) is a view showing the coupled state.
FIG. 11 is a partially exploded front view showing the configuration of an embodiment according to the present disclosure.
FIG. 12 is a view showing the configuration of an embodiment according to the present disclosure.
FIG. 12(a) is a front view showing that a plumbing pipe is inserted, and FIG. 12(b) is a partially excerpted view showing the unfolded state.
FIG. 13 is a view showing the configuration of an embodiment according to the present disclosure.
FIG. 13(a) is a front view showing that a plumbing pipe is inserted, and FIG. 13(b) is a partially excerpted view showing the unfolded state.
FIG. 14 is a partially excerpted view showing the installation state of an embodiment according to the present disclosure.

### [Detailed Description of Exemplary Embodiments]

Hereinafter, embodiments of the pipe insert for generating nano-bubbles and the nano-bubble generator comprising the same, according to the present disclosure, are specifically described with reference to the accompanying drawings.

The present invention is devised based on the theories of "bubble micronization and nano-bubble generation," which are caused by friction as described above.

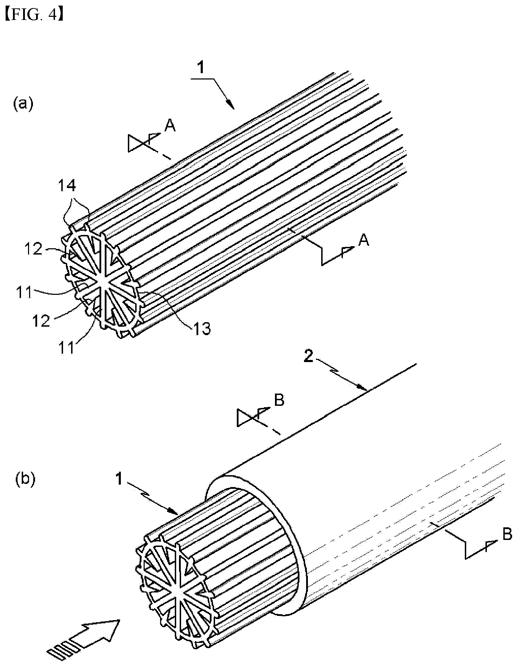

In an embodiment of the present disclosure, the pipe insert for generating nano-bubbles 1, as illustrated in FIGS. 4 to 9, is inserted and installed into a plumbing pipe 2 in the longitudinal direction, and in order to increase the friction surface of the gas-liquid mixed fluid in the pipe 2, the body of the insert is configured such that either or both of dividing walls 11 dividing the fluid path space of the pipe 2 and space dividers 12 protruding into the fluid path space of the pipe are formed continuously in the longitudinal direction of the pipe 2.

The dividing walls 11 described above are interconnected and form a closed space, supporting the structure of the body of the insert as well as forming the friction surface of the fluid, and can be connected to the main wall 13 as described hereinafter.

Unlike the dividing walls 11, the space dividers 12 have their front end in the middle of the space, and therefore, do not form a closed space.

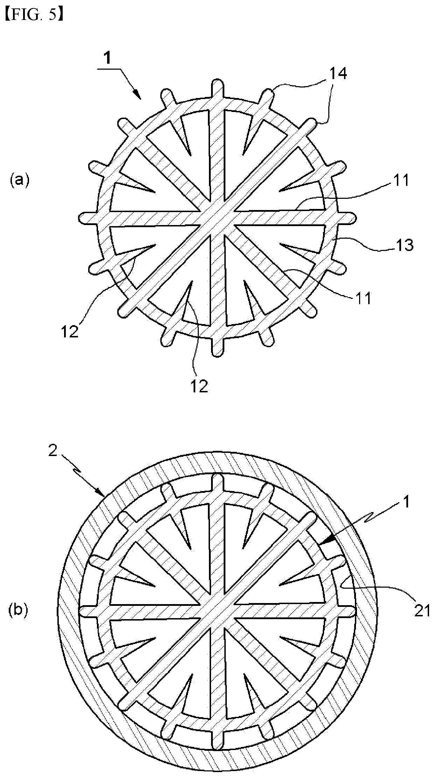

For the body of the insert, either or both of dividing walls 11 and space dividers 12 form a collection of friction surfaces, and the outer front end of the body of the insert is positioned near or in close contact with the inner wall 21 of the pipe (see FIGS. 4(b) and 5(b)).

The outer shape of the body of the insert may be formed to correspond to the shape of the cross-section of the pipe 2 into which the insert is inserted.

The body of the insert may be surrounded by the main wall 13, and one or more spacer protrusions 14 may be formed continuously around the main wall 13 in the longitudinal direction of the pipe 2 in order to maintains the gap between the main wall 13 and the inner wall 21 of the pipe (see FIGS. 4 to 6).

The main wall 13 is an outer wall surrounding the outside of the insert body, and like the dividing walls 11, it functions as a friction surface of the fluid and also supports the structure of the body of the insert.

As described above, the configuration in which the body of the insert comprising either or both of dividing walls 11 and space dividers 12 is surrounded by the main wall 13, and in which the main wall 13 has spacer protrusions 14 therearound may also be considered as the addition of spacer protrusions 14 to the fluid path member of related art 1 described above (see FIG. 2).

The spacer protrusions 14 serve not only as a support maintaining the gap between the main wall 13 and the inner wall of the pipe but also as a friction surface of the fluid.

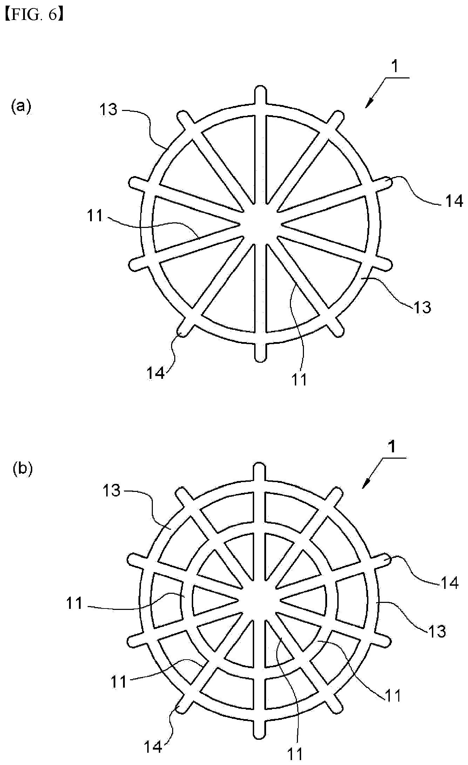

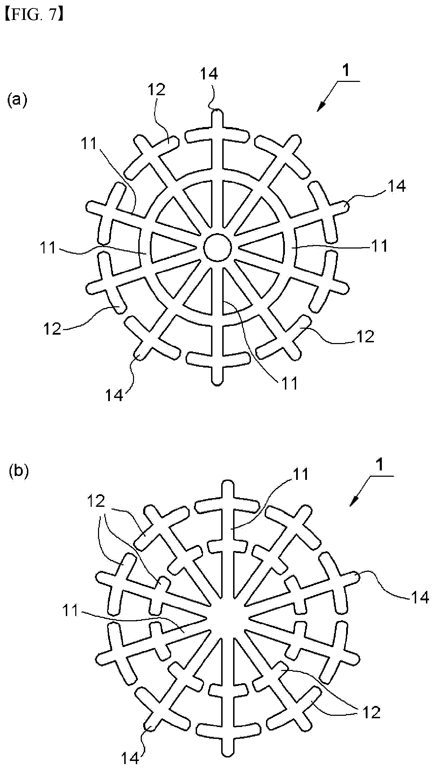

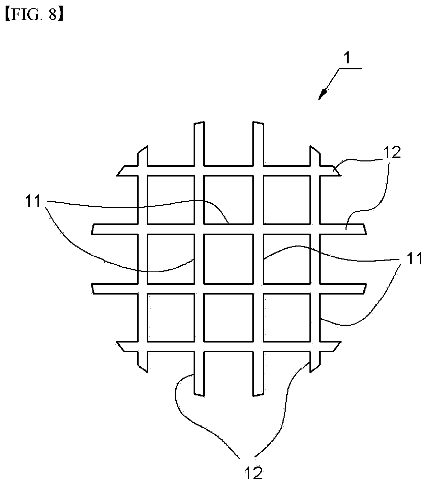

The body of the insert may be configured in various ways such as in the way that dividing walls 11, space dividers 12, the main wall 13 and spacer protrusions 14 are combined (see FIGS. 4 and 5), in the way that space dividers 12 are excluded among them (see FIGS. 6(a) and (b)), in the way that the mains wall 13 is excluded among them (see FIGS. 7 and 8), in the way that only space dividers 12 and spacer protrusions 14 are provided (see FIG. 7(b)), in the way that only space dividers 12 are provided (not illustrated), in the way that only dividing walls 11 are provided (not illustrated), and the like.

In addition, either or both of dividing walls 11 and space dividers 12 of the insert body may be formed into a variety of shapes such as radial shape, concentric circle shape (see FIGS. 5 to 7), grid shape (see FIG. 8), and the like.

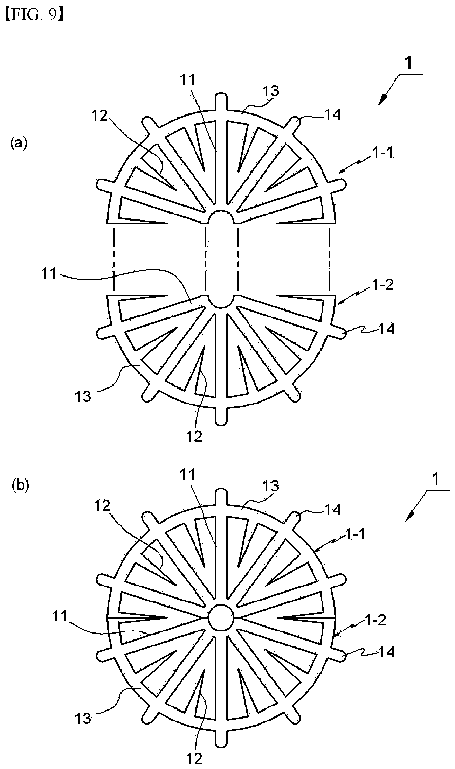

The body of the insert may be divided into two or more pieces 1-1, 1-2 (see FIG. 9).

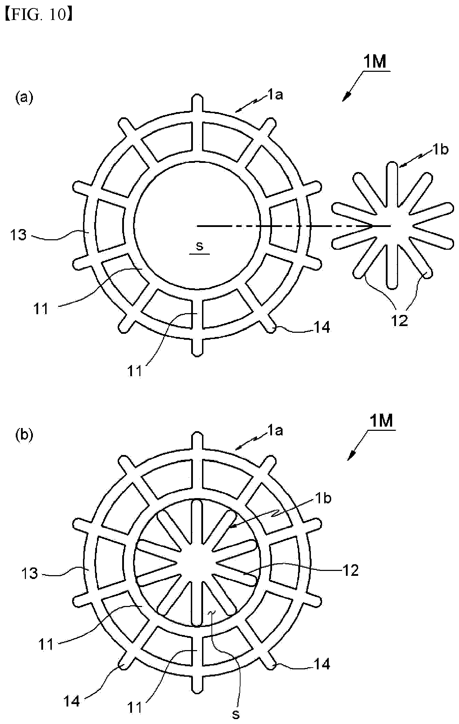

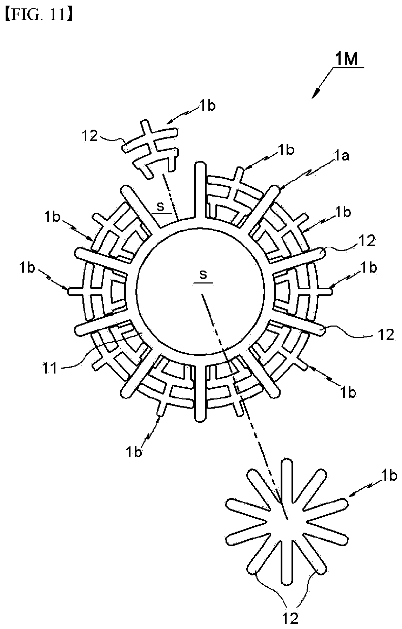

As in the embodiments illustrated in FIGS. 10 and 11, the pipe insert for generating nano-bubbles 1M is inserted and installed inside a plumbing pipe in the longitudinal direction.

In order to increase the friction surface of a gas-liquid mixed fluid for generating nano-bubbles in the pipe 2, an embodiment may have the main body 1a that forms one or more sectional spaces s, and one or more sub bodies 1b that are inserted longitudinally into the sectional spaces s of the main body 1a, and the main body 1a and the sub bodies 1b respectively may include either or both of dividing walls 11 dividing the fluid path space of the pipe and space dividers 12 protruding into the fluid path space.

The main body 1a forms multiple sectional spaces s, and can have a sub body 1b with multiple space dividers 12 and the like that is inserted into a sectional space s, and the sectional space s may be surrounded by dividing walls 11 or any one segment of the sectional space s may be open (see FIGS. 10 and 11).

In this configuration, the friction surface may be formed densely in a large-sized pipe with a large inner space, making it possible to generate a large quantity of nano-bubble water.

The body of the pipe insert 1, 1M for generating nano-bubbles according to the present disclosure is preferably extrusion-molded.

In addition, the body of the insert may be made of a hard or soft material.

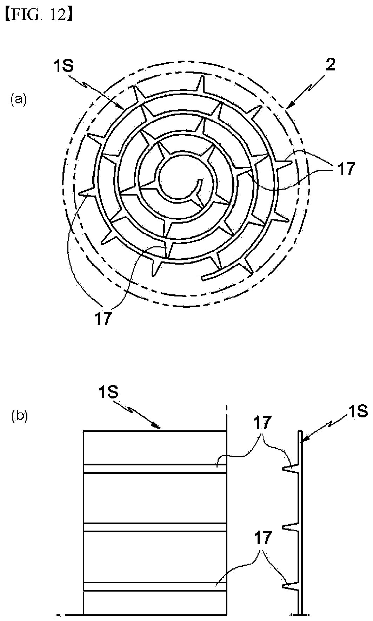

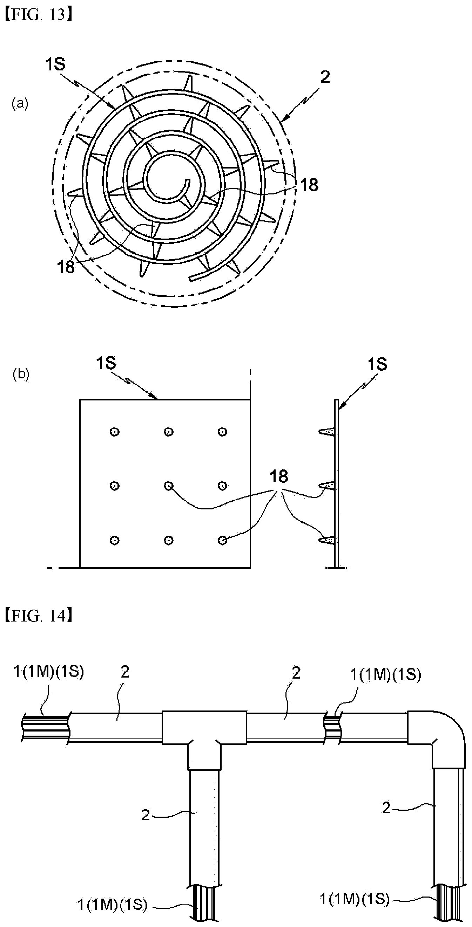

In an embodiment as illustrated in FIGS. 12 and 13, the pipe insert 1S for generating nano-bubbles is inserted and installed into a plumbing pipe in the longitudinal direction, and in order to increase the friction surface of a gas-liquid mixed fluid for generating nano-bubbles in the pipe, the cross-section of the body may be spiral-shaped and be formed continuously in the longitudinal direction of the pipe.

Multiple protrusions may be formed on the spiral-shaped insert body, which not only function as a space but also increase the friction surface, and the protrusions may be shaped into a strap-type 17 (see FIG. 12), a cone-type, and the like that is formed continuously in the longitudinal direction, or into a dot-type 18 that is arranged in matrix (see FIG. 13).

In the case where strap-type protrusions 17 are formed on the spiral-shaped body of the insert described above, the insert body may be extrusion-molded.

Furthermore, a plate having strap-type 17 or dot-type protrusions 18 may be rolled to form a spiral-shaped body of the insert (see FIGS. 12(b) and 13(b).

In the above description, the shapes of the dividing walls 11, the space dividers 12, the main wall 13, the spacer protrusions 14, and the like are cross-sectional structures that are orthogonal to the longitudinal direction of the body of the insert.

The installation and operation states of the pipe insert for generating nano-bubbles 1, 1M, 1S configured as above according to the present disclosure are described.

In the present disclosure, as "the theories of bubble micronization and nano-bubble generation by a friction force" are applied to solve the technical problems, a friction surface of fluid is created densely on the dividing walls 11, the space dividers 12, the main walls 13, the spacer protrusions 14, 17, 18, and the like, and the user can generate nano-bubble water simply by inserting the pipe insert into an ordinary water supply pipe.

In a pipe 2 into which the present invention is inserted and installed, the dividing walls 11, the space dividers 12, the main walls 13, the spacer protrusions 14, and the like serve as friction surfaces, thereby expanding the friction surface area per unit area of fluid path surface, and as a result, a meaningful concentration of nano-bubbles can be generated when bubbles included in a gas-liquid mixed fluid pass through the fluid path in the pipe for at least several meters.

Like the fluid path member 100 of related art 1, the present invention creates a friction surface densely in a pipe by inserting into the pipe the body of the insert with densely formed friction surface on the body, thereby solving the problem of expansion caused by inflow pressure as observed in the fluid path member 100.

Accordingly, the restrictions caused by the expansion of the fluid path member 100 are resolved, and an expansion prevention member is not required any more, thereby eliminating cumbersome processes consuming a lot of labor and time.

Furthermore, as the body of the insert comprising dividing walls 11, space dividers 12, and the like is inserted into and protected by a separate pipe 2, the main wall, which is usually an essential component of a fluid path member, is not required, and even in the case where the main wall 13 is provided, the main wall does not have to be thicker than the dividing walls 11 and the space dividers 12, ensuring the ease of extrusion-molding.

Furthermore, the pipe insert for generating nano-bubbles according to the present disclosure may be manufactured based on the size of pipes available in the market, such that the pipe insert can be installed in any pipe, ensuring easy installation and wide applicability.

Furthermore, the insert according to the present disclosure does not require a tailor-made pipe of particular specifications. Accordingly, the user can generate nano-bubble water simply by using an ordinary pipe or by inserting an insert product of the required size into the pipe of a particular size.

As described above, the inserts of the present disclosure are highly compatible with standard plumbing pipes, and can be easily installed with connectors such as linear pipe 2, T, elbow, and the like that are available for ordinary water supply pipes (see FIG. 14).

In nano-bubble generation, the nano-bubble concentration and micronization size may vary depending on the density of the dividing walls 11, the space dividers 12, and the like that form the friction surface of fluid, the length of the fluid path in which the present invention is inserted and installed into a pipe, water temperature, and so on.

While developing the present invention, the applicant requested an authorized test facility (NANOSIGHT) to test the generation of nano-bubbles by passing ordinary faucet water through the fluid path member 100 in an embodiment of related art 1 (tested on February 05, 2021, 17-28-52).

The fluid path member used in the test had an outer diameter of 15 mm, an inner diameter of 13 mm, and a length of 3.5 M, and the length ratio of the circumference of the fluid path space (friction surface) to the unit area of the cross-section of the fluid path space was 2.7:1, and the water temperature was 38 °C when the faucet water was passing through the fluid path member.

The test showed that as many as 527 millions of nano-bubbles were generated per 1mℓ of water and that the average size of the nano-bubbles was 91.2 nm (the graph is omitted).

Considering that existing ordinary nano-bubble generators are complex in configuration and relatively huge in size and that the number of nano-bubbles generated through the devices is about 200 million per 1mℓ of water, the results of the above-described test, in which ordinary water passed through a 3.5M-long fluid path member of a simple structure, prove that the tested fluid path member with a densely formed friction surface provides excellent performance in nano-bubble generation.

The pipe insert for generating nano-bubbles in the present disclosure is inserted and installed into a water supply pipe, and provides the same function as the fluid path member 100, generating nano-bubble water with excellent effects in sterilization, disinfection, deodorization, cleaning, and the like as shown in the test above.

Thus, just by inserting and installing the present invention in hygiene water supply devices such as kitchen sinks and shower heads or in water supply pipes of washing machines, dishwashers, and the like, the user can get nano-bubble water with excellent properties and benefits directly from the faucet or shower head, and the like without an additional device for nano-bubble generation.

Furthermore, any ordinary pipe can be selected and used as a means of generating nano-bubbles, and this enhances the convenience of nano-bubble generation remarkably.

The present invention can be inserted and installed into a water supply pipe 2 in the stage of constructing a building.

The nano-bubble generator according to the present disclosure comprises the above pipe insert for generating nano-bubbles.

Thus, a small or large amount of highly micronized nano-bubble water can be obtained easily with the widely applicable simple configuration.

The preferred embodiments according to the present disclosure are described above with reference to the accompanying drawings.

All the terms and words used herein should not be interpreted as having the same meaning as those defined in commonly used dictionaries but should be interpreted as having the meaning that is consistent with their meaning and concept within the technical spirit of the present disclosure. Additionally, the configurations illustrated in the embodiments and drawings of the present disclosure are provided only as preferred examples and do not represent all the technical spirits of the present disclosure. Thus, it is to be understood that there may be a variety of equivalents and modifications replacing the embodiments at a time of filing of the present disclosure.

### [Industrial Applicability]

As described above, the pipe insert for generating nano-bubbles and the nano-bubble generator comprising the same according to the present disclosure enable the generation of nano-bubble water of good quality in terms of concentrations and micronization sizes to be discharged directly through faucets, or shower heads, and the like, such that nano-bubble water having a variety of properties and benefits can be obtained conveniently and widely in any environment, ensuring easy industrial applicability.

## Claims

1. A pipe insert for generating nano-bubbles as an insert inserted and installed into a plumbing pipe in the longitudinal direction, wherein to increase the friction surface of a gas-liquid mixed fluid for generating nano-bubbles in the pipe, the body of the insert is formed in a way that either or both of dividing walls configured to divide the fluid path space of the pipe, and space dividers configured to protrude into the fluid path space are formed continuously in the longitudinal direction of the pipe.

2. The pipe insert of claim 1, wherein the body of the insert is surrounded by the main wall, and one or more spacer protrusions for maintaining the gap between the main wall and the inner wall of the pipe are formed continuously around the main wall in the longitudinal direction of the pipe.

3. A pipe insert for generating nano-bubbles as an insert inserted and installed into a plumbing pipe in the longitudinal direction, wherein, in order to increase the friction surface of a gas-liquid mixed fluid for generating nano-bubbles in the pipe, the pipe insert comprises the main body configured to form one or more sectional spaces, and one or more sub bodies inserted into the sectional spaces of the main body longitudinally, and
the main body and the sub body respectively comprise either or both of dividing walls configured to divide the fluid path space of the pipe, and space dividers configured to protrude into the fluid path space.

4. A pipe insert for generating nano-bubbles as an insert inserted and installed into a plumbing pipe in the longitudinal direction, wherein, in order to increase the friction surface of a gas-liquid mixed fluid for generating nano-bubbles in the pipe, the body of the insert has a spiral-shaped cross-section, and is formed continuously in the longitudinal direction of the pipe.

5. The pipe insert of claim 4, wherein multiple protrusions are formed on the body of the insert, and
the protrusions are shaped into a strap-type or a dot-type that are formed continuously in the longitudinal direction of the pipe.

6. A nano-bubble generator comprising a pipe insert for generating nano-bubbles according to any of claims 1 to 5.
